# EUROPEAN PATENT APPLICATION

(11) **EP 0 747 104 A2**
(43) Date of publication of application: **11.12.1996**
(21) Application number: 96109019.8
(22) Date of filing: 05.06.1996
(51) Int. Cl.: B01D 39/02

(54) **Dry blended filter beds**

(30) Priority: 09.06.1995 US 488881
(71) Applicant: Graver Chemical Company, Glasgow, Delaware 19702-3319 (US)
(72) Inventor: Matunas, Frank, Union, New Jersey 07083 (US)
(74) Representative: Modiano, Guido, Dr.-Ing.

(57) **Abstract**

A method and apparatus for removing impurities from a liquid by passing the liquid through a filter bed comprising a mixture of treated filter aid material and an active particulate material. The filter bed is produced by blending a mixture of filter aid material, active particulate material and an electrolyte-type compound that produces a surface charge opposite to the normal surface charge on the filter aid material in the presence of water so that the total solids content is greater than 20 percent during the blending of the mixture.

## Description

### Background Of The Invention

The present invention is directed to an improved method and filter bed for use in removing impurities from a liquid. More specifically, the present invention is directed to a method and filter bed in which the filter bed includes a mixture of treated filter aid material and active particulate materials wherein the filter bed is produced so that the solids content is greater than 20 percent during the blending of the mixture.

U.S. Patent Nos. 4,177,142, 4,190,532 and 4,238,334 disclose unique methods and filter beds for removing impurities from liquids. The filter beds in these patents include a mixture of treated filter aid material alone, or in combination with active particulate material, wherein a portion of the material is treated to produce opposite surface charges in aqueous suspension, to produce a clumping phenomenon. These patents are owned by the same assignee as the present invention.

In U.S. Patent No. 4,238,334 the methods and the filter beds comprise a mixture of treated filter aid material and an active particulate material having opposite surface charges in aqueous suspension so as to produce a clumping phenomenon. The filter aid material is treated with an electrolyte-type compound that produces a surface charge opposite the normal surface charge. As described in the patent, and as heretofore commercially practiced, these filter beds are produced by wet blending the treated filter aid material and the active particulate material in a demineralized water suspension. The slurry is then dewatered to produce a moist cake. The dewatered slurry or moist cake of filter material is delivered to the job site where it is typically re-suspended in water and applied as a filter bed in a well known manner.

In U.S. Patent No. 4,190,532 the methods and the filter beds comprise a mixture of ion exchange resin particles and treated filter aid material. The filter aid material is treated with an electrolyte-type compound that produces either a positive or a negative surface charge thereon so as to produce a clumping phenomenon. In U.S. Patent No. 4,177,142 the methods and the filter beds comprise a mixture of oppositely charged particles of filter aid material. A portion of these particles are treated with an electrolyte-type compound to produce a surface charge so as to produce a clumping phenomenon. As described above with respect to U.S. Patent No. 4,238,334, these filter beds are also produced by wet blending the treated filter aid material.

It has heretofore been believed that it was necessary to wet blend the above filter bed products during production in order to achieve even distribution of the electrolyte-type polymer. It is unexpected that the dry blending of such products would produce satisfactory filter bed products. It is normally believed that the flocculation process can only occur in a large excess of water because the excess water is needed to solubilize the polymer. Normally, with low water concentrations, the polymer would be in a tightly coiled configuration which is not effective in coating the surface of the materials being flocculated.

### Summary Of The Invention

Generally, the invention provides a method and filter bed for use in removing impurities from a liquid in which the filter bed includes a mixture of treated fibrous filter aid materials and an active particulate material that is produced in a manner so that the solids content is greater than 20 percent during the blending of the mixture.

In accordance with a preferred embodiment of the invention, the filter bed comprises a mixture of treated filter aid material and an active particulate material. The treated filter aid material and the active particulate material have opposite surface charges in aqueous suspension so as to produce a clumping phenomenon. In accordance with the invention, the filter bed is produced by blending a mixture of filter aid material, active particulate material and an electrolyte-type compound that produces a surface charge opposite to the normal surface charge of the filter aid material in the presence of water so that the total solids content is maintained at greater than about 20 percent during the blending of the mixture. During the blending of the mixture the solids content is preferably maintained at greater than about 30 percent and most preferably greater than about 50 percent.

The term "solids content" as used herein is intended to mean the percent by weight of all materials in a formation which are not evaporated at 100° for 8 hours.

As used herein the term "bed" refers to a layer, such as a precoat layer, which has been deposited on a filter screen, a round annular filter cartridge, a film, a deep or shallow bed, or the like. Such a bed may advantageously be deposited on a tubular filter of the general type described in U.S. Patent No. 4,269,707, which patent is assigned to the assignee of this application.

The term "filter aid material" as used herein is intended to mean those materials which are conventionally deposited on a filter screen or the like in order to aid in the filtration which is produced by the filter. Most of such materials are characterized by an electro-negatively charged surface. Such materials are well known in the art, and include diatomaceous earth, vermiculite, sand, cellulose fibers, charcoal, expanded perlite, asbestos fibers, synthetic fibers, etc. Particularly preferred filter aid particles for use in accordance with the invention are fibrous filter aid materials. The dimensions of these fibers are not critical. However, it is often desirable to control the dimensions to facilitate precoating onto a filter element In the case of cellulose fibers, which are available commercially under the trade name Solka-Floc, it is preferred that the fibers have a length of about 50 to 2000 microns, and more preferably of about 100 microns to 500 microns. Suitable fibrous filter aid materials may include cellulose fibers, polyacrylonitrile fibers, Teflon fibers, polyester fibers, nylon fibers, rayon fibers, polypropylene fibers, polyvinyl chloride fibers, and the like.

The term "active particulate material" as used herein is intended to mean those materials that are employed to remove either a narrow or a broad range of components from liquid streams through the phenomena of adsorption, absorption or chemical reaction. Examples of such materials include activated carbon, adsorptive clays such as bentonite, molecular sieves such as zeolite, Fuller's earth, zirconium phosphate, iron sulfide, diatomaceous earth, ion exchange resins, synthetic adsorbents, activated alumina, calcium silicate, and the like.

The term "electrolyte-type compound" as used herein is intended to mean such compounds that have a plurality of charge sites in order to form a bond with the filter aid material and to have charge sites remaining to produce a surface charge that is reverse of the normal surface charge. Reference is made to the disclosures in U.S. Patent Nos. 4,177,142, 4,190,532 and 4,238,334 for a detailed identification and discussion of such compounds and the manner in which they are used to treat the filter aid material in accordance with the invention, which disclosures are specifically incorporated herein by reference. Examples of such materials are polyelectrolytes such as polyacrylic acid, polyamines, polyacrylamide, polyacrylonitrile, finely divided cation exchange resin, finely divided anion exchange resin, and other polyelectrolytes commonly used in water treatment or process applications.

In accordance with another aspect of the invention, a method for removing impurities from a liquid is disclosed wherein the liquid is passed through a filter bed comprising a mixture of treated fibrous filter aid material and an active particulate material. The treated filter aid material and the active particulate material have opposite charges in aqueous suspension so as to produce a clumping phenomenon. The filter bed is produced by blending a mixture of filter aid material, active particulate material and an electrolyte-type compound that produces a surface charge opposite to the normal surface charge on the filter aid material in the presence of water so that the total solids content is greater than about 20 percent during the blending of the mixture.

In accordance with a further aspect of the invention, a method is disclosed for making a mixture of a treated filter aid material and an active particulate material for use as a filter bed wherein the treated filter aid material and the particulate material have opposite surface charges in aqueous suspension so as to produce a clumping phenomenon. The filter bed is produced by blending a mixture of filter aid material, active particulate materials and an electrolyte-type compound that produces a surface charge opposite to the normal surface charge of the filter aid material in the presence of water so that the total solids content is maintained at greater than about 20 percent during the blending step.

### Brief Description Of The Drawings

FIGURE 1 is a graph showing the results of the hydraulic performance tests of Examples I, II, III and IV precoated in a sucrose solution.

FIGURE 2 is a graph showing the results of the hydraulic performance tests of Examples I, II, III and IV precoated in a water solution.

### Description Of Preferred Embodiments

A filter bed in accordance with a preferred embodiment of the invention comprises a mixture of treated filter aid material and an active particulate material. The treated filter aid material and the active particulate material have opposite surface charges in aqueous suspension so as to produce a clumping phenomenon. It has been discovered that performance of the filter bed is enhanced by producing the filter bed in a manner wherein a filter aid material, an active particulate material and an electrolyte-type compound having a surface charge opposite to the normal surface charge on the filter aid material in the presence of water is mixed so that the total solids content is greater than about 20 percent during the blending of the mixture. During the blending of the mixture the solid content is preferably maintained at greater than about 30 percent and most preferably greater than about 50 percent.

The invention is also directed to a method for removing impurities from a liquid wherein the liquid is passed through a filter bed comprising a mixture of treated fibrous filter aid material and an active particulate material that is produced in the manner as discussed herein.

The invention is further directed to a method for making a mixture of a treated filter aid material and an active particulate for use as a filter bed wherein the filter bed is produced as discussed herein,

The amount of filter aid material employed in accordance with the invention varies according to a number of factors, primary among which is the level of ion exchange capacity that is required by the filter bed. Generally, the amount of filter aid material may be varied from about 1.0% to 95% based upon the total weight of the filter bed.

Once the filter bed has been prepared, it may be precoated onto a filter according to methods which are well known in the art. Simply stated, the precoat filter bed is formed by recirculating the suspension through the filter until a clarified effluent is obtained. The filter is then ready for use in the removal of impurities from liquids.

The following Examples I, II, III and IV are intended to illustrate the present invention, and to compare it with the filter beds employed in the prior art. These Examples should not be considered to limit the present invention, the scope of which is determined by the claims.

For comparison purposes, each of the Examples was tested for hydraulic performance by adding 4.3 dry grams of the sample to 1000 ml of a 170°F 40 Brix sucrose solution and then precoated the mixture on to a 0.038 ft.² cylindrical stainless steel mesh filter element with a 50 x 250 mesh wire cloth filter surface. The mixtures of Examples III and IV were stirred for 20 minutes prior to precoating. The hydraulic performance profile of each sample was determined by directing the mixture through the element at different pressures and the flow rates were recorded.

### EXAMPLE I

30 grams of BH-20 cellulose fiber (manufactured by International Filler Co.) was added to a one liter beaker containing 700 mls of deionized water. The cellulose fiber was suspended using a magnetic stir bar and 70 grams of Nuchar SN powdered activated carbon (manufactured by Westvaco Co.) was added. After 10 minutes of stirring, 70 mls of a 0.1% solution of MAGNIFLOC 844A, an anionic polyacrylamide (manufactured by American Cyanamid Company), was added. The suspension was stirred for an additional 5 minutes and 70 mls of a 10% suspension of ground SA-21A anion exchange resin (manufactured by Mitsubishi) was added. Stirring was continued for 10 minutes. The slurry was then dewatered in a Buchner funnel resulting in a moist cake (60-70% moisture).

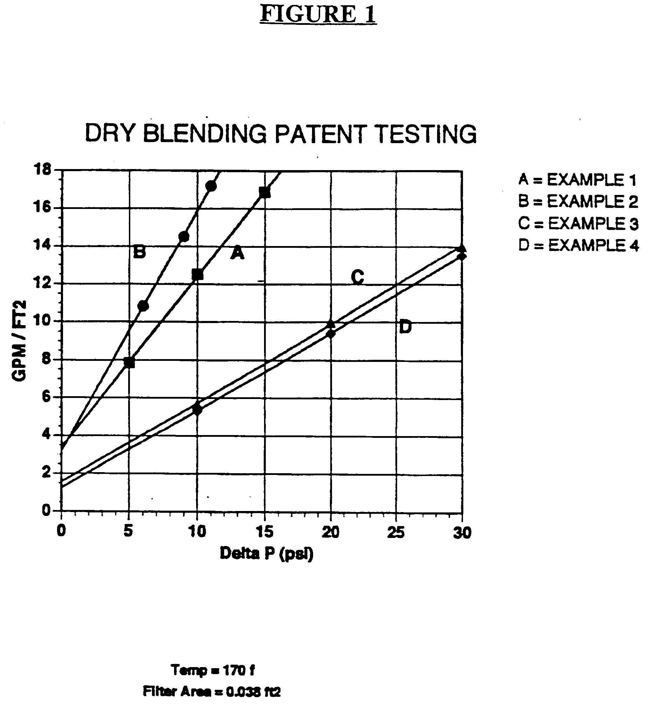

A sample of the cake of Example I was evaluated for hydraulic performance in accordance with the above procedure and the hydraulic performance profile is shown as line A in FIGURE 1.

### EXAMPLE II

30 grams of BH-20 cellulose fiber and 70 grams of Nuchar SN powdered activated carbon were dry mixed in a small planetary mixer. After 2 minutes, 70 mls of a 0.1% of MAGNIFLOC 844A polyacrylamide solution was added at a rate of 70 mls/minute. Mixing was continued for 5 minutes to assure uniform distribution of the polyacrylamide. 70 mls of a 10% suspension of ground SA-21A anion exchange resin was added at a rate of 70 mls/minute while mixing. Mixing was continued for an additional 5 minutes resulting in a moist cake (60-65% moisture).

A sample of the cake of Example II was evaluated for hydraulic performance in accordance with the above procedure and the hydraulic performance profile is shown as line B in FIGURE 1.

### EXAMPLE III

30 grams of BH-20 cellulose fiber and 70 grams of Nuchar SN powdered activated carbon were dry mixed in a small planetary mixer. After 2 minutes, 70 mgs of dry MAGNIFLOC 844A polyacrylamide was added and mixing was continued for 5 minutes to assure a uniform distribution. 70 mls of a 10% ground SA-21A anion exchange resin suspension was added at a rate of 70 mls/minute while mixing. Mixing was continued for an additional 5 minutes resulting in a moist cake (37-43% moisture).

A sample of the cake of Example III was evaluated for hydraulic performance in accordance with the above procedure and the hydraulic performance profile is shown as line C in FIGURE 1.

### EXAMPLE IV

30 grams of BH-20 cellulose fiber and 70 grams of Nuchar SN powdered activated carbon were dry mixed in a small planetary mixer. After 2 minutes, 70 mgs of dry MAGNIFLOC 844A polyacrylamide was added and mixing was continued for 5 minutes to assure uniform distribution. 8.3 grams of dry ground SA-21A anion exchange resin was then added and mixed for 5 minutes resulting in a dry powder (approximately 10% moisture).

A sample of the dry powder of Example IV was evaluated for hydraulic performance in accordance with the above procedure and the hydraulic performance profile is shown as line D in FIGURE 1.

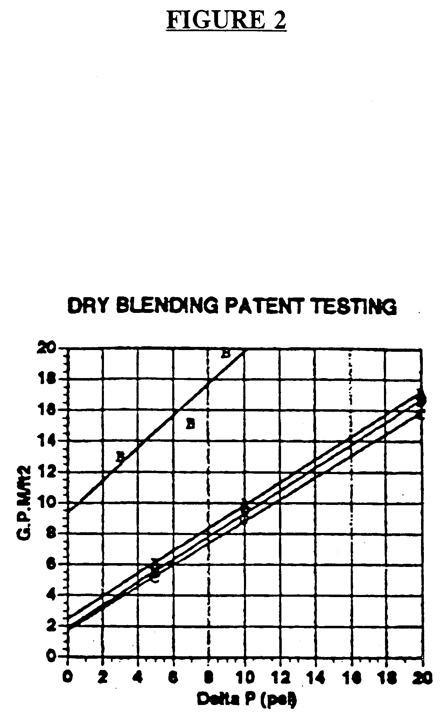

Each of the Examples were additionally tested in the same manner as discussed above except that water was used in place of the sucrose solution. The hydraulic performance profiles of such tests for Examples I, II, III and IV are shown respectively as lines A, B, C and D in FIGURE 2.

Referring to FIGURES 1 and 2, line A (Example I) represents the hydraulic performance of an example of the prior art wet blending procedure. Lines B, C and D represent the hydraulic performance examples of the dry blending procedure of the present invention. It is important to note that both the Examples III and IV have lower moisture contents than the Examples I and II. The permeability of these Examples is most surprising as it would have been expected that the low moisture content would inhibit floc formation during precoating.

The Examples and theories set forth above are provided to communicate the invention, and do not limit the subject matter of the appended claims. The teachings of all patents incorporated by reference herein are incorporated in their entirety. Many modifications and variations of the invention as hereinbefore set forth will occur to those skilled in the art upon reading this description, and it is intended to cover in the appended claims all such modifications and variations as fall within the true spirit and scope of the invention.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. An improved filter bed comprising a mixture of treated filter aid material, wherein said filter bed is produced by blending a mixture of filter aid material and an electrolyte-type compound that produces a surface charge opposite to the normal surface charge of the filter aid material in the presence of water so that the total solids content is maintained at greater than about 20 percent during the blending of the mixture.

2. The improved filter bed according to claim 1 wherein said mixture comprises an active particulate material, said treated filter aid material and said active particulate material having opposite surface charges in aqueous suspension so as to produce a clumping phenomenon.

3. The improved filter bed as defined in claim 2 wherein said filter aid material, said active particulate material and said electrolyte-type compound are blended substantially in the absence of added water.

4. The improved filter bed as defined in claim 1,2 or 3 wherein said filter aid material comprises about 1.0% to 95% by weight of said bed.

5. The improved filter bed as defined in claim 1,2,3 or 4 wherein said filter aid material is selected from the group consisting of diatomaceous earth, vermiculite, sand, cellulose fibers, charcoal, expanded perlite, asbestos fibers and synthetic fibers.

6. The improved filter bed as defined in claim 5 wherein the fibers of said filter aid material have an average length of from about 50 to 2000 microns.

7. The improved filter bed as defined in claims 2 or 3 wherein said active particulate materials is selected from the group consisting of activated carbon, adsorptive clays, molecular sieves, Fuller's earth, zirconium phosphate, iron sulfide, diatomaceous earth, ion exchange resins, synthetic adsorbents, activated alumina, and calcium silicate.

8. The improved filter bed as defined in claims 1 or 3 wherein said electrolyte-type compound is a polyelectrolyte selected from the group consisting of polyacrylic acid, polyamines, polyacrylamide, polyacrylonitrile, finely divided cation exchange resin, and finely divided anion exchange resin.

9. The improved filter bed as defined in claim 1 wherein said total solids content is maintained at greater than 30 percent during the blending of the mixture, and preferably wherein said total solids content is maintained at about 50 percent during the blending of the mixture.

10. The improved filter bed as defined in claims 2 or 3 wherein the filter aid material is blended with the active particulate material prior to being blended with the electrolyte-type compound.

11. The improved filter bed as defined in claims 2 or 3 wherein the filter aid material is cellulose fibers and the active particulate material is activated carbon particles.

12. A method for removing impurities from a liquid, comprising: passing the liquid through a filter bed as defined in one or more of claims 1-11, wherein said filter bed is produced by blending a mixture of filter aid material and an electrolyte-type compound that produces a surface charge opposite to the normal surface charge on the filter aid material in the presence of water so that the total solids content is greater than 20 percent during the blending of the mixture.

13. The method according to claim 12, wherein the filter bed comprises an active particulate material, said treated filter aid material and said active particulate material having opposite surface charges in aqueous suspension so as to produce a clumping phenomenon, and including the step of blending an active particulate material in the mixture.

14. The method as defined in claim 13 wherein said filter aid material, said active particulate material and said electrolyte-type compound are blended substantially in the absence of added water.

15. The method as defined in claim 12 or 13 wherein said filter aid material comprises about 5% to 95% by weight of said bed.

16. The method as defined in claim 12,13,14 or 15 wherein said filter aid material is selected from the group consisting of diatomaceous earth, vermiculite, sand, cellulose fibers, charcoal, expanded perlite, asbestos fibers and synthetic fibers.

17. The method as defined in claim 12 wherein said filter aid material comprises a fibrous material, and preferably wherein the fibers of said filter aid material have an average length of from about 50 to 2000 microns.

18. The method as defined in claims 13 or 14 wherein said active particulate materials is selected from the group consisting of activated carbon, adsorptive clays, molecular sieves, Fuller's earth, zirconium phosphate, iron sulfide, diatomaceous earth, ion exchange resins, synthetic adsorbents, activated alumina, and calcium silicate.

19. The method as defined in claim 12 or 14 wherein said electrolyte-type compound is a polyelectrolyte selected from the group consisting of polyacrylic acid, polyamines, polyacrylamide, polyacrylonitrile, finely divided cation exchange resin, and finely divided anion exchange resin.

20. The method as defined in claim 12 or 13 wherein said total solids content is maintained at greater than 30 percent during the blending of the mixture, and preferably wherein said total solids content is maintained at about 50 percent during the blending of the mixture.

21. The method as defined in claim 13 wherein the filter aid material is blended with the active particulate material prior to being blended with the electrolyte-type compound.

22. The method as defined in claim 13 wherein the filter aid material is cellulose fibers and the active particulate material is activated carbon particles.

23. A method of making a mixture of treated filter aid material for use as a filter bed as defined in one or more of claims 1-11, comprising the step of blending a mixture of filter aid material and an electrolyte-type compound that produces a surface charge opposite to the normal surface charge of the filter aid material in the presence of water so that the total solids content is maintained at greater than about 20 percent during the blending step.

24. The method defined in claim 23, wherein an active particulate material is included in said mixture, said treated filter aid material and said particulate material having opposite surface changes in aqueous suspension so as to produce a clumping phenomenon.

25. The method as defined in claim 23 wherein said filter aid material, said active particulate material and said electrolyte-type compound are blended substantially in the absence of added water.

26. The method as defined in claims 23,24, or 25 wherein said filter aid material comprises about 5% to 95% by weight of said bed.

27. The method as defined in claims 23,24,25 or 26 wherein said filter aid material is selected from the group consisting of diatomaceous earth, vermiculite, sand, cellulose fibers, charcoal, expanded perlite, asbestos fibers and synthetic fibers.

28. The method as defined in claim 27 wherein said filter aid material comprises a fibrous material, and preferably wherein the fibers of said filter aid material have an average length of from about 50 to 2000 microns.

29. The method as defined in claims 25 or 26 wherein said active particulate materials is selected from the group consisting of activated carbon, adsorptive clays, molecular sieves, Fuller's earth, zirconium phosphate, iron sulfide, diatomaceous earth, ion exchange resins, synthetic adsorbents, activated alumina, and calcium silicate.

30. The method as defined in claims 23 or 25 wherein said electrolyte-type compound is a polyelectrolyte selected from the group consisting of polyacrylic acid, polyamines, polyacrylamide, polyacrylonitrile, finely divided cation exchange resin, and finely divided anion exchange resin.

31. The method as defined in claim 25 wherein said total solids content is maintained at greater than 30 percent during the blending of the mixture, and preferably wherein said total solids content is maintained at about 50 percent during the blending of the mixture.

32. The method as defined in claims 23 or 25 wherein the filter aid material is blended with the active particulate material prior to being blended with the electrolyte-type compound.

33. The method as defined in claims 23 or 25 wherein the filter aid material is cellulose fibers and the active particulate material is activated carbon particles.
